# FASCICULE DE BREVET EUROPEEN

(11) **EP 3 507 591 B1**
(45) Date de publication et mention de la délivrance du brevet: **08.07.2020**
(21) Numéro de dépôt: 17754136.4
(22) Date de dépôt: 10.08.2017
(51) Int. Cl.: G01N 21/71

(54) **MÉTHODE ET DISPOSITIF POUR AUGMENTER LA SENSIBILITÉ DE LA MESURE EN LIGNE DE LA PROPRETÉ DE SURFACE DES BANDES D'ACIER**
VERFAHREN UND VORRICHTUNG ZUR ERHÖHUNG DER EMPFINDLICHKEIT EINER INLINE-MESSUNG DER OBERFLÄCHENREINHEIT VON STAHLBÄNDERN
METHOD AND DEVICE FOR INCREASING THE SENSITIVITY OF AN IN-LINE MEASUREMENT OF THE SURFACE CLEANLINESS OF STEEL STRIPS

(30) Priorité: 02.09.2016 BE 201605674
(43) Date de publication de la demande: 10.07.2019
(73) Titulaire: Centre de Recherches Métallurgiques ASBL - Centrum voor Research in de Metallurgie VZW, 1000 Bruxelles (BE)
(72) Inventeur: MONFORT, Guy, 4420 Montegnee (BE); MOREAS, Geneviève, 4520 Wanze (BE)
(74) Mandataire: Pronovem
(86) Numéro de dépôt international: PCT/EP2017/070373
(87) Numéro de publication internationale: WO 2018/041597

(56) Documents cités:
- WO-A1-2009/138262
- US-A- 5 537 206
- AGUILERA J A ET AL: "DETERMINATION OF CARBON CONTENT IN STEEL USING LASER-INDUCED BREAKDOWN SPECTROSCOPY", APPLIED SPECTROSCOPY, THE SOCIETY FOR APPLIED SPECTROSCOPY. BALTIMORE, US, vol. 46, no. 9, 1 septembre 1992 (1992-09-01), pages 1382-1387, XP000296801, ISSN: 0003-7028, DOI: 10.1366/0003702924123692
- ABDELLI-MESSACI S ET AL: "CN emission spectroscopy study of carbon plasma in nitrogen environment", SPECTROCHIMICA ACTA. PART B: ATOMIC SPECTROSCOPY, NEW YORK, NY, US, US, vol. 60, no. 7-8, 31 août 2005 (2005-08-31), pages 955-959, XP027717918, ISSN: 0584-8547 [extrait le 2005-08-31] cité dans la demande

## Description

### Objet de l'invention

La présente invention se rapporte à une méthode pour augmenter la sensibilité de la mesure en ligne de la propreté de surface d'une bande ou tôle métallique en défilement continu, basée sur la méthode LIBS (pour *laser-induced breakdown spectroscopy* ou spectroscopie sur plasma induit par laser).

L'invention se rapporte également à un dispositif pour la mise en œuvre du procédé.

### Arrière-plan technologique et état de la technique

Lors de la fabrication de tôles d'acier, le processus de laminage à froid génère essentiellement deux types d'impuretés à la surface des tôles : d'une part du carbone de surface, qui provient de la dégradation des huiles de laminage et d'autre part des fines de fer dont l'origine se trouve dans les interactions avec les cylindres utilisés pour le laminage.

Cette pollution de surface est gênante car elle nécessite un nettoyage plus fréquent des cylindres et les bains de décapage sont plus rapidement pollués. Ceci occasionne évidemment des coûts supplémentaires. Les tôles sales doivent également être recuites plus longtemps, ce qui est aussi plus coûteux. De plus, dans les étapes ultérieures de galvanisation ou de mise en peinture, ces dépôts se traduisent par des défauts d'adhérence qui ont des conséquences sur la tenue à la corrosion des produits finis. Enfin, dans les fours de recuit, notamment avant galvanisation, les pollutions carbonées génèrent à la longue des suies qui se déposent sur les parois du four ce qui nécessite un nettoyage plus fréquent. De même, les fines de fer peuvent s'accumuler à la longue sur les rouleaux du four, ce qui peut entraîner des défauts sur la tôle.

La mesure de cette pollution en ligne a fait l'objet de plusieurs développements ces dernières années. Les trois principales méthodes à l'heure actuelle sont les suivantes :
- une méthode relativement récente est basée sur une absorption de rayonnement infrarouge. Elle est essentiellement influencée par le carbone de surface et assez peu par les fines de fer. La sensibilité est limitée et il n'y a pas encore beaucoup de recul industriel (voir Krauth P.J., "Contrôle de la propreté des surfaces d'acier", La Revue de Métallurgie - CIT, Juin 2002) ;
- une autre méthode se base sur l'analyse de l'intensité lumineuse d'un plasma généré à la surface de la tôle par un faisceau laser focalisé. Au départ, le dispositif mesurait le bruit généré par le plasma (*"*A real time method for surface cleanliness measurement", G. M. Bilmes et al., Appl. Phys. B 82, 643-648, 2006). Cependant, le système actuel mesure plutôt l'intensité lumineuse globale du plasma. (*"*Practical Experiences with Novel Non-Contact, Online, Surface Cleanliness Measurement System", E. Almquist, U. Crossa, Proceedings Galvatech 2015). Ce système est essentiellement sensible aux fines de fer et assez peu à la pollution en carbone ;
- enfin, à la connaissance des inventeurs, le seul dispositif permettant actuellement de mesurer en ligne simultanément et indépendamment les fines de fer et le carbone de surface est basé sur la méthode LIBS et a été développé par la Demanderesse dans le cadre d'un projet de recherche européen (Lowwear Project, RFCS Contract No RFSR-CT-2006-00010 - 1 July 2006 to 31 December 2009*).* Cette méthode, appliquée à la sortie de la ligne de laminage à froid, mesure le niveau de fines de fer en comparant l'intensité de deux raies de fer d'énergies différentes. En effet, plus il y a de particules fines pour alimenter le plasma, plus la vaporisation est aisée et plus il reste d'énergie dans l'impulsion laser pour exciter les atomes du plasma à un niveau énergétique élevé. Pour la mesure du carbone de surface, une raie intense du carbone est utilisée, typiquement la raie à 193 nm. L'inconvénient de cette mesure est que la longueur d'onde de cette raie se situe dans l'UV lointain et donc qu'elle est absorbée par l'oxygène de l'air, ce qui réduit l'intensité utile lors d'une mesure à distance. Une autre raie sensible existe à 247,8 nm qui est peu absorbée mais qui se superpose à une raie de fer, ce qui rend son utilisation difficile.

D'autre part, dans la production moderne d'aciers de qualité, il est important de garantir une très grande propreté de surface, notamment avant galvanisation. Pour s'en assurer, il est habituel de nettoyer la surface dans des bains de dégraissage dans lesquels une solution chimique enlève les salissures, essentiellement de nature organique, tandis qu'un ou plusieurs brossages permet de débarrasser la tôle de pollutions solides telles que les fines de fer. Une méthode d'analyse en ligne qui différencierait clairement le carbone des fines de fer serait donc intéressante puisqu'elle permettrait non seulement d'évaluer l'efficacité du dégraissage mais aussi de déterminer si un manque de propreté est plutôt lié à une défectuosité du brossage ou à celle de la composition de la solution de nettoyage.

La méthode proposée par la Demanderesse (voir ci-dessus) se montre efficace après laminage à froid où le niveau de pollution en carbone est de l'ordre de plusieurs centaines de milligrammes de carbone par mètre carré. Par contre, après dégraissage, ce niveau tombe à moins de quelques dizaines de milligrammes par mètre carré et l'utilisation d'une raie de carbone partiellement absorbée par l'oxygène de l'air est insuffisante pour garantir une mesure précise à ces niveaux de propreté.

Par ailleurs, il est connu par la littérature que le carbone présent dans des composés organiques peut être avantageusement mesuré par la réaction de celui-ci dans un plasma avec l'azote atomique provenant de l'air ou d'une atmosphère d'azote gazeux entourant le plasma.

Cette technique a notamment été utilisée pour l'analyse de dépôts minces de nitrures de carbone (*"*CN emission spectroscopy study of carbon plasma in nitrogen environment", S. Abdelli-Messaci et al., Spectrochimica Acta Part B 60 (2005) 955 - 959) et pour la différenciation d'explosifs ("New challenges and insights in the detection and spectral identification of organic explosives by laser induced breakdown spectroscopy", P. Lucena et al., Spectrochimica Acta Part B 66 (2011) 12-20).

De plus, certaines études sur matériaux organiques ont permis d'expliquer les mécanismes de formation du radical CN dans le plasma et de déterminer les densités d'énergie nécessaires à la création de ce type de radical ("Vibrational emission analysis of the CN molecules in laser-induced breakdown spectroscopy of organic compounds", Ángel Fernández-Bravo et al., Spectrochimica Acta Part B 89 (2013) 77-83).

Dans Aguilera J. A. et al., "Determination of carbon content in steel using laser-induced breakdown spectroscopy", Applied Spectroscopy, vol. 46, no. 9 (1992), pages 1382-1387, on démontre que l'on peut utiliser la méthode LIBS pour déterminer la teneur en carbone dans un acier, avec une précision et une limite de détection comparable avec celles obenues par spectroscopie d'émission atomique. Ce document montre en outre qu'il faut travailler sous atmosphère d'azote ou d'argon pour éviter que la mesure du C soit influencée par la décomposition du CO2 atmosphérique. Les courbes de calibration ont été obtenues en utilisant le rapport de la raie du C à 193 nm et la raie du Fe à 201 nm (cette raie du Fe n'interfère pas avec d'autres raies). On ne peut pas utiliser la raie du C à 248 nm car elle interfère avec la raie du Fe à cette même longueur d'onde.

Enfin, le document WO 2009/138262 A1 fournit une méthode de mesure de la propreté d'une bande d'acier en ligne et automatisée, consistant à analyser par traitement d'image une couronne oxydée créée à la surface de la bande par un faisceau laser ou d'électrons.

### Buts de l'invention

La présente invention vise à fournir une méthode de mesure de la propreté de surface d'une bande ou tôle métallique en défilement continu obtenue par laminage à froid à la sortie des lignes de dégraissage. Il s'agit de permettre une mesure séparée de la pollution en carbone de surface et en fines de fer qui n'est possible dans l'état actuel de la technique qu'à la sortie de la ligne de laminage à froid où les niveaux de pollution sont nettement plus élevés.

Cette invention a aussi pour but de procurer un dispositif permettant d'atteindre la précision voulue dans la mesure de la propreté de surface des tôles d'acier à la sortie des lignes de dégraissage.

### Principaux éléments caractéristiques de l'invention

Un premier aspect de la présente invention se rapporte à une méthode de mesure en ligne, automatisée, de la propreté de surface différentiée en carbone d'une bande ou tôle métallique en défilement continu, présentant un niveau de pollution de surface inférieur à 100 mg/m², de préférence inférieur à 50 mg/m², caractérisée par les étapes suivantes :
- on génère un faisceau de rayonnement au moyen d'une source ;
- on focalise le faisceau de rayonnement au moyen d'un dispositif de focalisation de manière à ce que la densité d'énergie déposée sur la bande ou tôle métallique soit suffisante pour créer un plasma et pour générer des radicaux CN dans le plasma si celui-ci contient du carbone et de l'azote ;
- on crée autour du plasma une atmosphère d'azote grâce à un système de balayage avec un débit apte à éviter toute présence d'oxygène de l'air dans le plasma ;
- on analyse, au moyen d'un dispositif optique de collecte, la lumière émise par le plasma et on redirige cette lumière émise vers un spectromètre ou tout autre moyen de séparation des longueurs d'onde de la lumière émise ;
- on mesure l'intensité d'une raie de vibration intense du radical CN et on rapporte cette intensité à celle d'une raie de vibration de l'azote, afin de compenser les fluctuations liées au faisceau de rayonnement et aux interactions rayonnement - matière, la raie de vibration intense du radical CN étant la raie de vibration à 388,25 nm et la raie de vibration de l'azote étant la raie de vibration à 500,51 nm, et
- on utilise le rapport obtenu pour caractériser la propreté de la surface de la bande ou tôle métallique en termes de pollution au carbone.

Des modes d'exécution préférés de la méthode de l'invention reprennent en outre, en combinaison, une ou plusieurs des caractéristiques ci-après :
- ledit faisceau de rayonnement est un faisceau laser ou un faisceau d'électrons ;
- la densité d'énergie désirée sur la surface de bande ou tôle est obtenue grâce à un faisceau laser de puissance et de diamètre focal adéquats, le faisceau étant focalisé sur ladite surface soit directement, soit par une focalisation améliorée par un dispositif optique d'expansion préalable du faisceau ;
- le laser est un laser à impulsions, ledit laser et le dispositif de focalisation étant choisis pour créer une densité d'énergie à la surface de la bande ou tôle métallique comprise entre 10 et 100 GW/cm² et de préférence comprise entre 30 et 60 GW/cm² ;
- le dispositif optique de collecte est une pluralité de lentilles ou de miroirs ou encore une combinaison des deux qui imagent le plasma sur l'extrémité d'une fibre optique, qui elle-même redirige le faisceau lumineux vers le spectromètre ou un autre moyen de séparation les longueurs d'onde de la lumière émise ;
- la bande ou tôle métallique est une bande d'acier ;
- la vitesse de défilement de la bande ou la tôle métallique (3) est supérieure à 0,5 m/s ;
- la méthode est utilisée dans le cas d'une ligne de laminage à froid et après passage dans un bain de dégraissage.

Un autre aspect de l'invention se rapporte à un dispositif de mesure en ligne, automatisée, de la propreté de surface d'une bande ou tôle métallique en défilement continu, caractérisé en ce qu'il comprend :
- un laser pulsé, générant un faisceau de diamètre compris entre 0,5 et 10 mm, sous forme d'impulsions de durée comprise entre 0,5 et 15 ns, avec une énergie comprise entre 1 et 300 mJ par impulsion, pour la génération d'un plasma à la surface de la bande ou tôle métallique ;
- un dispositif de focalisation permettant une expansion de faisceau d'un facteur compris entre 2 et 10 et permettant de focaliser le faisceau sur la bande ou tôle métallique à une distance comprise entre 10 et 200 cm ;
- un système de balayage d'azote au voisinage du plasma sur la bande ou tôle métallique avec un débit apte à éviter toute présence d'oxygène de l'air dans le plasma ;
- un dispositif optique de collecte comprenant une pluralité de lentilles, de miroirs ou une combinaison des deux, pour imager la lumière émise par le plasma sur une fibre optique ;
- une fibre optique ;
- un spectromètre relié à la fibre optique ;
- un analyseur de spectre permettant de calculer le rapport de l'intensité de la raie de vibration du carbone à 388,25 nm et de la raie de vibration de l'azote à 500,51 nm.

### Brève description des figures

La figure 1 montre un schéma de principe du dispositif utilisé selon la présente invention, reprenant les éléments principaux tels que la source de rayonnement, l'optique de focalisation, la bande ou tôle en défilement, le système d'amenée de l'azote autour ou au voisinage du plasma, le dispositif de collecte de la lumière et le spectromètre d'analyse.
La figure 2 montre un exemple de spectre contenant les raies spécifiques CN et N utilisées pour la détermination de la pollution en carbone de surface.
La figure 3 montre, sur un exemple, une comparaison entre les mesures effectuées selon la méthode et avec le dispositif de l'invention et les mesures réalisées en laboratoire par une méthode de référence (méthode par combustion).

### Description d'une forme d'exécution préférée de l'invention

La méthode et le dispositif proposés selon la présente invention améliorent la méthode et le dispositif décrits dans l'état de l'art pour l'analyse par LIBS de la propreté de surface en carbone des bandes et tôles métalliques en défilement, par exemple en acier. La méthode décrite se base sur la mesure des raies de radicaux CN, qui est connue de la littérature mais, à la connaissance des inventeurs, n'a jamais été mise en œuvre pour améliorer la mesure de la propreté de surface de bandes ou tôles métalliques.

Le principe de l'amélioration est décrit ci-après, avec un exemple d'implémentation.

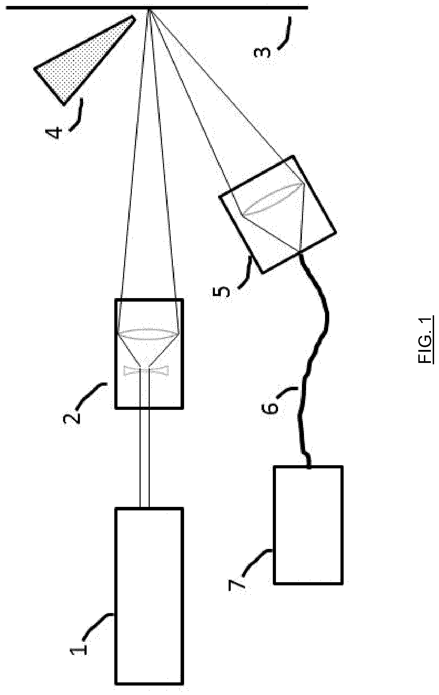

Comme montré à la figure 1, le faisceau d'un laser 1, de préférence pulsé, est focalisé à l'aide d'un dispositif optique approprié 2, sur la surface de la tôle ou bande métallique en défilement 3. La puissance du laser et le diamètre focal sont avantageusement choisis de manière à ce que la densité de puissance obtenue sur la tôle soit suffisante pour créer un plasma à la surface de la tôle. De plus, et en supplément de la pratique courante, l'énergie des impulsions laser et le dispositif de focalisation sont choisis de manière à créer une densité d'énergie comprise entre 10 et 100 GW/cm², idéalement entre 30 et 60 GW/cm² de manière à générer des radicaux CN en présence d'azote et de carbone.

A titre d'exemple, une telle densité d'énergie peut être obtenue à l'aide d'un laser, générant un faisceau de 3 mm de diamètre, sous forme d'impulsions de 8 ns et d'une énergie de 50 mJ par impulsion, associé à un dispositif optique qui provoque une expansion du faisceau d'un facteur 8 puis focalise ledit faisceau à une distance de 30 centimètres. Dans ces conditions, on obtient un point focal de 150 µm de diamètre et une densité de puissance d'environ 35 GW/cm².

La zone au voisinage de la tôle où est créé le plasma est soumise à un balayage à l'azote 4 de manière à obtenir des radicaux CN en présence d'une pollution en carbone de surface tout en évitant qu'une partie de ce carbone ne réagisse avec l'oxygène de l'air.

La lumière émise par le plasma est ensuite collectée par un ensemble de lentilles 5 qui imagent le plasma sur l'extrémité d'une fibre optique 6 qui, elle-même, redirige la lumière vers un dispositif d'analyse tel qu'un spectromètre 7.

La méthode selon l'invention utilise alors la raie de vibration (0-0), ou toute autre raie adéquate, des radicaux CN, créés de manière optimale par le choix du dispositif décrit ci-dessus. L'intensité de cette raie est avantageusement rapportée à une raie d'azote (en ce sens que l'on effectue le rapport de leurs intensités respectives), de préférence la raie à 500,51 nm, qui est suffisamment intense et qui présente peu d'interférences avec d'autres éléments. Ce ratio permet de s'affranchir de fluctuations de l'intensité lumineuse globale du plasma liées, par exemple, aux variations de l'intensité du faisceau laser ou du couplage rayonnement-matière. D'habitude, sur acier, on utilise une raie de fer comme référence. Cependant, dans le cas de mesures de propreté de surface, la présence de fines de fer entraîne des variations relatives dans l'intensité des raies de fer, en fonction de l'énergie nécessaire pour les créer. L'utilisation d'une raie de fer est donc moins fiable que celle de l'azote qui sera plus stable vu la saturation en azote autour du plasma suite à l'utilisation du dispositif de balayage à l'azote 4.

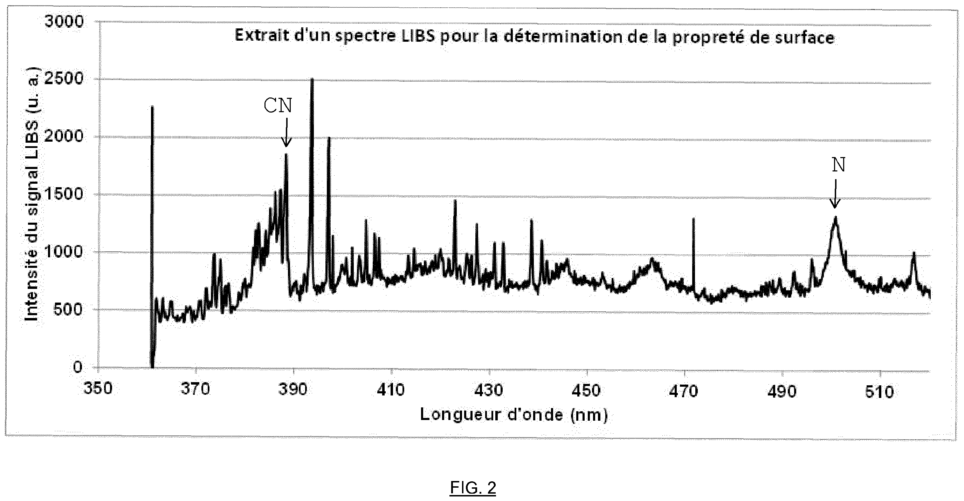

La figure 2 donne un exemple de spectre, choisi sur une tôle avant dégraissage pour bien mettre en évidence les raies utilisées pour appliquer la méthode de l'invention.

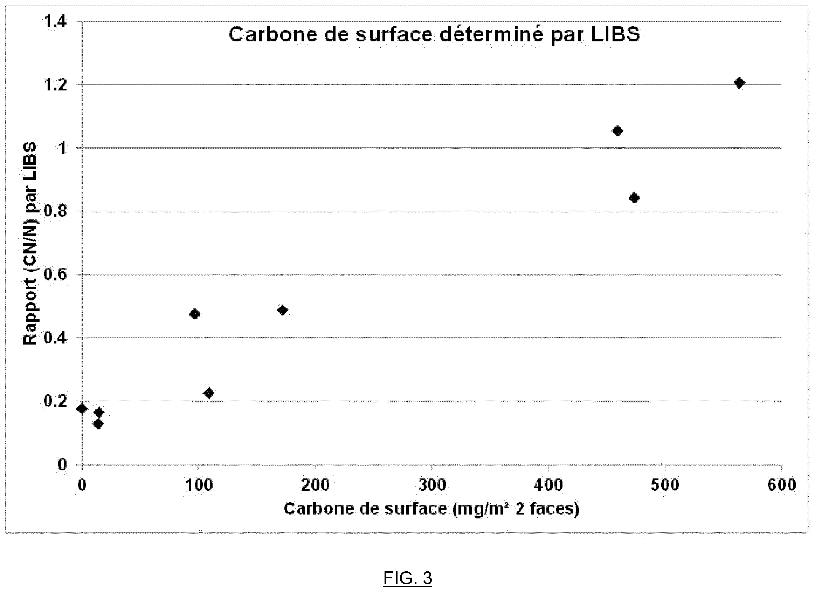

La figure 3 donne un exemple de comparaison entre les mesures effectuées par la méthode et le dispositif de l'invention d'une part et les résultats des analyses par une méthode de référence de laboratoire (méthode par combustion). Les différents cas correspondent à trois aciers différents analysés dans les conditions suivantes (soit trois groupes de trois points en allant de droite à gauche sur la figure 3) :
- en sortie de laminoir ;
- après un dégraissage partiel sur une ligne pilote de dégraissage en continu de la Demanderesse ;
- après un dégraissage plus intensif, variant selon l'acier testé, obtenu par deux passages successifs sur la même ligne pilote de dégraissage.

On peut ainsi constater que la méthode de l'invention permet de discriminer des niveaux de pollution de surface variant depuis l'état en sortie de laminage à froid jusqu'à des niveaux de pollution très faibles.

### Avantages de la méthode

Cette méthode a l'avantage de déterminer la pollution en carbone de surface à l'aide d'une raie CN dont les conditions de mesure (énergie laser couplée avec le dispositif de focalisation, balayage à l'azote) optimisent l'intensité.

L'utilisation de la raie CN située dans l'UV proche permet de s'affranchir de l'absorption par l'oxygène de l'air, au contraire de la raie intense du carbone à 193 nm.

L'atmosphère d'azote créée autour du plasma empêche la formation d'une couche d'oxyde autour de la zone d'impact du laser après l'extinction du plasma. La formation de cet oxyde pourrait, de manière désavantageuse, modifier localement l'émissivité thermique de la tôle et changer très localement l'absorption d'énergie thermique lors du passage dans les fours, avant galvanisation par exemple.

L'ensemble de ces avantages, importants par eux-mêmes, se traduit par une sensibilité accrue pour l'analyse des pollutions en carbone de surface des bandes et tôles métalliques. Ceci permet donc de faire des mesures significatives non seulement en sortie de laminage à froid mais aussi en sortie de bain de dégraissage.

## Revendications

1. Méthode de mesure en ligne, automatisée, de la propreté de surface différentiée en carbone d'une bande ou tôle métallique (3) en défilement continu, présentant un niveau de pollution de surface en carbone inférieur à 100 mg/m², de préférence inférieur à 50 mg/m², **caractérisée par** les étapes suivantes :
- on génère un faisceau de rayonnement au moyen d'une source (1) ;
- on focalise le faisceau de rayonnement au moyen d'un dispositif de focalisation (2) de manière à ce que la densité d'énergie déposée sur la bande ou tôle métallique (3) soit suffisante pour créer un plasma et pour générer des radicaux CN dans le plasma si celui-ci contient du carbone et de l'azote ;
- on crée autour du plasma une atmosphère d'azote grâce à un système de balayage (4) avec un débit apte à éviter toute présence d'oxygène de l'air dans le plasma ;
- on analyse, au moyen d'un dispositif optique de collecte (5), la lumière émise par le plasma et on redirige cette lumière émise vers un spectromètre ou tout autre moyen de séparation des longueurs d'onde de la lumière émise (7) ;
- on mesure l'intensité d'une raie de vibration intense du radical CN et on rapporte cette intensité à celle d'une raie de vibration de l'azote, afin de compenser les fluctuations liées au faisceau de rayonnement et aux interactions rayonnement - matière, la raie de vibration intense du radical CN étant la raie de vibration à 388,25 nm et la raie de vibration de l'azote étant la raie de vibration à 500,51 nm, et
- on utilise le rapport obtenu pour caractériser la propreté de la surface de la bande ou tôle métallique (3), en termes de pollution au carbone.

2. Méthode de mesure en ligne, automatisée, de la propreté de surface d'une bande ou tôle métallique (3) en défilement continu selon la revendication 1, **caractérisée en ce que** ledit faisceau de rayonnement est un faisceau laser ou un faisceau d'électrons.

3. Méthode de mesure en ligne, automatisée, de la propreté de surface d'une bande ou tôle métallique (3) en défilement continu selon la revendication 1 ou 2, **caractérisée en ce que** la densité d'énergie désirée sur la surface de bande ou tôle est obtenue grâce à un faisceau laser (1) de puissance et de diamètre focal adéquats, le faisceau étant focalisé sur ladite surface soit directement, soit par une focalisation améliorée par un dispositif optique d'expansion préalable du faisceau (2).

4. Méthode de mesure en ligne, automatisée, de la propreté de surface d'une bande ou tôle métallique (3) en défilement continu selon la revendication 3, **caractérisée en ce que** le laser (1) est un laser à impulsions, ledit laser (1) et le dispositif de focalisation (2) étant choisis pour créer une densité d'énergie à la surface de la bande ou tôle métallique (3) comprise entre 10 et 100 GW/cm² et de préférence comprise entre 30 et 60 GW/cm².

5. Méthode de mesure en ligne, automatisée, de la propreté de surface d'une bande ou tôle métallique (3) en défilement continu selon la revendication 1, **caractérisée en ce que** le dispositif optique de collecte (5) est une pluralité de lentilles ou de miroirs ou encore une combinaison des deux qui imagent le plasma sur l'extrémité d'une fibre optique (6), qui elle-même redirige le faisceau lumineux vers le spectromètre ou un autre moyen de séparation les longueurs d'onde de la lumière émise (7).

6. Méthode de mesure en ligne, automatisée, de la propreté de surface d'une bande ou tôle métallique (3) en défilement continu selon la revendication 1, **caractérisée en ce que** la bande ou tôle métallique (3) est une bande d'acier.

7. Méthode de mesure en ligne, automatisée, de la propreté de surface d'une bande ou tôle métallique (3) en défilement continu selon la revendication 1, **caractérisée en ce que** la vitesse de défilement de la bande ou la tôle métallique (3) est supérieure à 0,5 m/s.

8. Méthode de mesure en ligne, automatisée, de la propreté de surface d'une bande ou tôle métallique (3) en défilement continu selon la revendication 1, dans le cas d'une ligne de laminage à froid et après passage dans un bain de dégraissage.

9. Dispositif de mesure en ligne, automatisée, de la propreté de surface d'une bande ou tôle métallique (3) en défilement continu, **caractérisé en ce qu'**il comprend :
- un laser pulsé (1), générant un faisceau de diamètre compris entre 0,5 et 10 mm, sous forme d'impulsions de durée comprise entre 0,5 et 15 ns, avec une énergie comprise entre 1 et 300 mJ par impulsion, pour la génération d'un plasma à la surface de la bande ou tôle métallique (3) ;
- un dispositif de focalisation (2) permettant une expansion de faisceau d'un facteur compris entre 2 et 10 et permettant de focaliser le faisceau sur la bande ou tôle métallique (3) à une distance comprise entre 10 et 200 cm ;
- un système de balayage d'azote (4) au voisinage du plasma sur la bande ou tôle métallique (3) avec un débit apte à éviter toute présence d'oxygène de l'air dans le plasma ;
- un dispositif optique de collecte (5) comprenant une pluralité de lentilles, de miroirs ou une combinaison des deux, pour imager la lumière émise par le plasma sur une fibre optique ;
- une fibre optique (6) ;
- un spectromètre (7) relié à la fibre optique (6) ;
- un analyseur de spectre permettant de calculer le rapport de l'intensité de la raie de vibration du carbone à 388,25 nm et de la raie de vibration de l'azote à 500,51 nm.

## Patentansprüche

1. Verfahren zur automatisierten Inline-Messung der differenzierten Oberflächenreinheit bezüglich Kohlenstoff eines kontinuierlich bewegten Metallbandes oder -blechs (3), aufweisend einen Oberflächenverschmutzungsgrad mit Kohlenstoff unter 100 mg/m², vorzugsweise unter 50 mg/m², **gekennzeichnet durch** die folgenden Schritte:
- Generieren eines Strahlungsstrahls mittels einer Quelle (1);
- Fokussieren des Strahlungsstrahls mittels einer Fokussiervorrichtung (2) derart, dass die auf dem Metallbande oder -blech (3) aufgebrachte Energiedichte ausreichend ist, um ein Plasma zu erzeugen und um in dem Plasma CN-Radikale zu generieren, wenn es Kohlenstoff und Stickstoff enthält;
- Erzeugen, um das Plasma, einer Stickstoffatmosphäre mit einem Abtastsystem (4) mit einer Leistung, die imstande ist, jedes Vorhandensein von Luftsauerstoff in dem Plasma zu vermeiden;
- Analysieren, mittels einer optischen Sammelvorrichtung (5), des von dem Plasma gesendeten Lichts, und Umleiten dieses gesendeten Lichts zu einem Spektrometer oder jedem anderen Mittel zum Trennen der Wellenlängen des gesendeten Lichts (7);
- Messen der Stärke einer Intensivvibrationslinie des CN-Radikals und Setzen dieser Stärke ins Verhältnis mit einer Vibrationslinie des Stickstoffs, um die mit dem Strahlungsstrahl und den Strahlung-Materie-Interaktionen verbundenen Schwankungen auszugleichen, wobei die Intensivvibrationslinie des CN-Radikals die Vibrationslinie bei 388,25 nm und die Vibrationslinie des Stickstoffs die Vibrationslinie bei 500,51 nm ist, und
- Verwenden des erhaltenen Verhältnisses, um die Reinheit der Oberfläche des Metallbandes oder -blechs (3) hinsichtlich Kohlenstoffverschmutzung charakterisieren zu können.

2. Verfahren zur automatisierten Inline-Messung der Oberflächenreinheit eines kontinuierlich bewegten Metallbandes oder -blechs (3) nach Anspruch 1, **dadurch gekennzeichnet, dass** der Strahlungsstrahl ein Laserstrahl oder ein Elektronenstrahl ist.

3. Verfahren zur automatisierten Inline-Messung der Oberflächenreinheit eines kontinuierlich bewegten Metallbandes oder -blechs (3) nach Anspruch 1 oder 2, **dadurch gekennzeichnet, dass** die gewünschte Energiedichte auf der Band- oder Blechoberfläche mit einem Laserstrahl (1) mit einer Leistung und einem Fokaldurchmesser erhalten wird, die entsprechend sind, wobei der Strahl auf die Oberfläche entweder direkt oder durch eine durch dem Strahl (2) vorangestellte optische Expansionsvorrichtung verbesserte Fokussierung fokussiert wird.

4. Verfahren zur automatisierten Inline-Messung der Oberflächenreinheit eines kontinuierlich bewegten Metallbandes oder -blechs (3) nach Anspruch 3, **dadurch gekennzeichnet, dass** der Laser (1) ein Impulslaser ist, wobei der Laser (1) und die Fokussiervorrichtung (2) ausgewählt sind, um eine Energiedichte auf der Oberfläche des Metallbandes oder -blechs (3) zu erzeugen, die zwischen 10 und 100 GW/cm² und vorzugsweise zwischen 30 und 60 GW/cm² liegt.

5. Verfahren zur automatisierten Inline-Messung der Oberflächenreinheit eines kontinuierlich bewegten Metallbandes oder -blechs (3) nach Anspruch 1, **dadurch gekennzeichnet, dass** die optische Sammelvorrichtung (5) eine Vielzahl von Linsen oder von Spiegeln oder auch eine Kombination beider ist, die das Plasma auf das Ende einer optischen Faser (6) imaginieren, die selbst den Lichtstrahl zu dem Spektrometer oder einem anderen Mittel zum Trennen der Wellenlängen des gesendeten Lichts (7) umleitet.

6. Verfahren zur automatisierten Inline-Messung der Oberflächenreinheit eines kontinuierlich bewegten Metallbandes oder -blechs (3) nach Anspruch 1, **dadurch gekennzeichnet, dass** das Metallband oder -blech (3) ein Stahlband ist.

7. Verfahren zur automatisierten Inline-Messung der Oberflächenreinheit eines kontinuierlich bewegten Metallbandes oder -blechs (3) nach Anspruch 1, **dadurch gekennzeichnet, dass** die Bewegungsgeschwindigkeit des Metallbandes oder -blechs (3) über 0,5 m/s beträgt.

8. Verfahren zur automatisierten Inline-Messung der Oberflächenreinheit eines kontinuierlich bewegten Metallbandes oder -blechs (3) nach Anspruch 1 im Fall einer Kaltwalzlinie und nach Durchgang durch ein Entfettungsbad.

9. Vorrichtung zur automatisierten Inline-Messung der Oberflächenreinheit eines kontinuierlich bewegten Metallbandes oder -blechs (3), **dadurch gekennzeichnet, dass** sie umfasst:
- einen gepulsten Laser (1), der einen Strahl mit einem Durchmesser zwischen 0,5 und 10 mm in Form von Impulsen einer Dauer zwischen 0,5 und 15 ns mit einer Energie zwischen 1 und 300 mJ je Impuls für die Generierung eines Plasmas an der Oberfläche des Metallbandes oder -blechs (3) generiert;
- eine Fokussiervorrichtung (2), die eine Strahlexpansion mit einem Faktor zwischen 2 und 10 gestattet und gestattet, den Strahl auf das Metallband oder - blech (3) in einem Abstand zwischen 10 und 200 cm zu fokussieren;
- ein Stickstoffabtastsystem (4) in der Nähe des Plasmas auf dem Metallband oder -blech (3) mit einer Leistung, die imstande ist, jedwedes Vorhandensein von Luftsauerstoff in dem Plasma zu vermeiden;
- eine optische Sammelvorrichtung (5), aufweisend eine Vielzahl von Linsen, von Spiegeln oder einer Kombination beider, um das von dem Plasma über eine optische Faser gesendete Licht zu imaginieren;
- eine optische Faser (6);
- ein mit der optischen Faser (6) verbundenes Spektrometer (7);
- einen Spektralanalysierer, der gestattet, das Verhältnis der Stärke der Vibrationslinie des Kohlenstoffs bei 388,25 nm und der Vibrationslinie des Stickstoffs bei 500,51 nm zu berechnen.

## Claims

1. A method for the automated, in-line measurement of the differentiated surface cleanliness, in terms of carbon, of a continuously-moving metal sheet or strip (3), having a level of surface carbon pollution lower than 100 mg/m², preferably lower than 50 mg/m², **characterized by** the following steps:
- a radiation beam is generated using a source (1);
- the radiation beam is focused using the focusing device (2) such that the energy density deposited on the metal strip or sheet (3) is sufficient to create a plasma and generate CN radicals in the plasma if the latter contains carbon and nitrogen;
- a nitrogen atmosphere is created around the plasma using a sweeping system (4) with a flow rate that can prevent any presence of oxygen from the air in the plasma;
- the light emitted by the plasma is analyzed using an optical collection device (5) and is redirected toward a spectrometer or any other means for separating wavelengths of the emitted light (7);
- the intensity of an intense vibration line of the CN radical is measured and is related to that of a vibration line of the nitrogen, in order to compensate for the fluctuations linked to the radiation beam and to the radiation - material interactions, the intense vibration line of the CN radical being the vibration line at 388.25 nm and the vibration line of the nitrogen being the vibration line at 500.51 nm, and
- the obtained ratio is used to characterize the surface cleanliness of the metal strip or sheet (3), in terms of carbon pollution.

2. Method for the automated, in-line measurement of the surface cleanliness of a continuously-moving metal sheet or strip (3) according to Claim 1, **characterized in that** said radiation beam is a laser beam or an electron beam.

3. Method for the automated, in-line measurement of the surface cleanliness of a continuously-moving metal sheet or strip (3) according to Claim 1 or 2, **characterized in that** the desired energy density on the strip or sheet surface is obtained owing to a laser beam (1) with appropriate power and focal diameter, the beam being focused on said surface either directly, or by focusing improved by an optical device for the prior expansion of the beam (2).

4. Method for the automated, in-line measurement of the surface cleanliness of a continuously-moving metal sheet or strip (3) according to Claim 3, **characterized in that** the laser (1) is a pulsed laser, said laser (1) and the focusing device (2) being chosen to create an energy density on the surface of the metal strip or sheet (3) of between 10 and 100 GW/cm² and preferably of between 30 and 60 GW/cm².

5. Method for the automated, in-line measurement of the surface cleanliness of a continuously-moving metal sheet or strip (3) according to Claim 1, **characterized in that** the optical collection device (5) is a plurality of lenses or mirrors or even a combination of both that image the plasma on the end of an optical fiber (6), which in turn redirects the light beam toward the spectrometer or another means for separating the wavelengths of the emitted light (7).

6. Method for the automated, in-line measurement of the surface cleanliness of a continuously-moving metal sheet or strip (3) according to Claim 1, **characterized in that** the metal strip or sheet (3) is a steel strip.

7. Method for the automated, in-line measurement of the surface cleanliness of a continuously-moving metal sheet or strip (3) according to Claim 1, **characterized in that** the motion speed of the metal strip or sheet (3) is greater than 0.5 m/s.

8. Method for the automated, in-line measurement of the surface cleanliness of a continuously-moving metal sheet or strip (3) according to Claim 1, in the case of a cold rolling line and after passage in a degreasing bath.

9. A device for the in-line, automated measurement of the surface cleanliness of a continuously-moving metal strip or sheet (3), **characterized in that** it comprises:
- a pulsed laser (1), generating a beam with a diameter of between 0.5 and 10 mm, in the form of pulses with a duration of between 0.5 and 15 ns, with an energy of between 1 and 300 mJ per pulse, to generate a plasma on the surface of the metal strip or sheet (3);
- a focusing device (2) allowing to expand a beam by a factor of between 2 and 10 and allowing to focus the beam on the metal strip or sheet (3) at a distance of between 10 and 200 cm;
- a nitrogen sweeping system (4) in the vicinity of the plasma on this metal strip or sheet (3) with a flow rate that can prevent any presence of oxygen from the air in the plasma;
- an optical collection device (5) comprising a plurality of lenses, mirrors or a combination of both, to image the light emitted by the plasma on an optical fiber;
- an optical fiber (6);
- a spectrometer (7) connected to the optical fiber (6);
- a spectrum analyzer allowing to calculate the ratio of the intensity of the vibration line of the carbon at 388.25 nm and of the vibration line of the nitrogen at 500.51 nm.
